**Europäisches Patentamt**

**European Patent Office**

**Office européen des brevets**

(19)

(11) Veröffentlichungsnummer: **0 006 138 B1**

(12) **EUROPÄISCHE PATENTSCHRIFT**

(45) Veröffentlichungstag der Patentschrift: **19.08.81**

(21) Anmeldenummer: **79101542.3**

(22) Anmeldetag: **21.05.79**

(51) Int. Cl.³: **B 01 D 53/04, C 01 B 3/56**

(54) Verfahren zum Betrieb einer Druck-Wechsel-Adsorption-Anlage.

(30) Priorität: **27.05.78 DE 2823211**

(43) Veröffentlichungstag der Anmeldung:
**09.01.80 Patentblatt 80/1**

(45) Bekanntmachung des Hinweises auf die Patenterteilung:
**19.08.81 Patentblatt 81/33**

(84) Benannte Vertragsstaaten:
**BE DE FR GB IT NL**

(56) Entgegenhaltungen:
**DE - A - 1 545 233**
**DE - A1 - 2 352 075**
**DE - A1 - 2 454 801**

(73) Patentinhaber: **BAYER ANTWERPEN N.V.**
**Kanaaldok B 1 Kruisschans**
**B-2040 Antwerpen 4 (BE)**

(73) Patentinhaber: **Linde Aktiengesellschaft**
**Abraham-Lincoln-Strasse 21**
**D-6200 Wiesbaden (DE)**

(72) Erfinder: **de Meyer, Herman, Dr.**
**Geestenspoor 117**
**B-2070 Ekeren (BE)**
Erfinder: **Doclo, Roland, Dr.**
**Groene wandeling 19**
**B-2232 Schilde-'s Gravenwezel (BE)**
Erfinder: **Seynaeve, Jan, Ir.**
**Pauwelslei 16**
**B-2130 Brasschaat (BE)**

(74) Vertreter: **Bünemann, Gerhard, Dr. et al,**
**c/o Bayer AG Zentralbereich, Patente Marken und Lizenzen**
**D-5090 Leverkusen 1, Bayerwerk (DE)**

Courier Press, Leamington Spa, England.

Verfahren zum Betrieb einer Druck-Wechsel-Adsorption-Anlage

Druck-Wechsel-Anlagen werden zum Trennen von Gasgemischen, beispielsweise Wasserstoff, von Kohlendioxid- und Stickstoffverunreinigungen, durch Adsorption in einem adiabatischen Druckkreisprozeß eingesetzt. Die Adsorption der Verunreinigungen erfolgt in Adsorberbetten, die z.B. nach US-Patentschrift 3 564 816 in einem ersten Abschnitt Aktivkohle und in einem zweiten Abschnitt kristallinen Calciumzeolith A aufweisen. Das zu reinigende Gas durchströmt die Adsorberbetten, wobei unter Druck von beispielsweise 15 bis 20 bar die Verunreinigungen adsorbiert werden. So wird z.B. ein Wasserstoffproduktgas mit 99,9999% Reinheit gewonnen. Die Adsorberbetten müssen in regelmäßigen Abständen regeneriert werden, wobei zunächst der in dem Bett herrschende Arbeitsdruck sowohl produktseitig als auch rohgasseitig abgebaut werden muß, bevor das Bett unter Strömungsumkehr zur Entfernung der adsorbierten Verunreinigungen gespült werden kann. Wegen der mechanischen Empfindlichkeit der Adsorberbetten muß der Druckabbau und -aufbau allmählich erfolgen, so daß sich produktseitig und rohgasseitig keine größeren Druckunterschiede aufbauen können. Das einzelne Adsorberbett wird daher in 4 Betriebsphasen betrieben:

1. Druckaufbauphase
2. Adsorptionsphase
3. Druckabbauphase
4. Spülphase usw.

Es hat sich daher als zweckmäßig erwiesen, mehrere Adsorberbetten phasenverschoben parallel zu betreiben, so daß der Druckaufbau in einem Adsorberbett jeweils durch Druckausgleich mit einem anderen, sich in der Druckabbauphase befindlichen Adsorberbett erfolgen kann.

Zur Vermeidung von Gasverlusten und zur Energieeinsparung ist man dazu übergegangen, eine Vielzahl von Adsorberbetten parallel zu betreiben, um so die Phasenunterschiede zwischen den jeweils an einem Druckausgleich beteiligten Adsorberbetten möglichst gering zu halten und damit zu einem angenähert adiabatischen Druckkreisprozeß zu gelangen.

Ein solches Verfahren, bei dem z.B. 7-10 Adsorberbetten parallel betrieben werden, wird z.B. in der deutschen Offenlegungsschrift 2 629 450 beschrieben. Der Druckaufbau und Druckabbau erfolgt bei diesem bekannten Verfahren über jeweils mindestens 3 Druckausgleichsphasen, wobei der Druckausgleich jeweils zwischen 2 sich in benachbarten Druckbereichen befindlichen Adsorberbetten erfolgt.

Naturgemäß nimmt bei solchen adiabatischen Druckkreisprozessen die Anzahl der zur Steuerung des Kreisprozesses notwendigen Ventile und Verbindungsleitungen mit der Anzahl der parallel eingesetzten Adsorberbetten zu. Zum Beispiel beträgt die Anzahl der notwendigen Ventile bei dem Verfahren mit 10 Adsorberbetten gemäß DE - A - 2 629 450 55. Jedes dieser Ventile wird innerhalb eines Arbeitszyklus von ca. 15 Minuten Zeitdauer mindestens zweimal, meistens jedoch viermal, gemäß einem vorgegebenen Taktschema betätigt. Zur Gewährleistung eines möglichst linearen Druckausgleichs werden empfindliche regelbare Ventile eingesetzt.

Der Druckausgleich erfolgt über gemeinsame Verbindungsleitungen zwischen allen Adsorberbetten, die gemäß dem vorgegebenen Taktschema zeitteilig jeweils zwischen 2 Adsorberbetten benutzt werden. Im Falle eines Defektes eines Ventils, z.B. wenn ein Ventil nicht mehr vollständig schließt, treten in den Adsorberbetten und im Leitungssystem Druckverluste auf, die dazu zwingen, die Anlage stillzulegen und eine Vielzahl von für den Defekt in Frage kommenden Ventilen zu testen, das defekte Ventil zu identifizieren, auszutauschen und die Anlage wieder anzufahren. Durch einen solchen Defekt sind daher Stillstandszeiten der Anlagen, Gasverluste und Energieverluste durch Auf- und Abbau von Drücken verbunden.

Es wurde nun ein Verfahren gefunden, nach dem die genannten adiabatischen Druckkreisprozeßanlagen mit einer Vielzahl von parallel betriebenen Druckadsorptionseinheiten betrieben werden können, ohne daß im Falle eines defekten Ventils ein Abstellen der Anlage notwendig wird.

Die vorliegende Erfindung betrifft daher ein kontinuierliches selektives Adsorptionsverfahren nach dem Druckwechselprinzip mit zumindest acht phasenverschoben arbeitenden Adsorptionseinheiten mit einem Taktschema, wonach in jeder Adsorptionseinheit zur periodischen Überführung zwischen den Arbeitszuständen "Adsorption" und "Gegenstromspülung" zur Erzielung einer angenähert adiabatischen Druckänderung durch Verbindung über entsprechend gestellte Ventile mit einer jeweils im Nachbar-Druckbereich befindlichen Adsorptionseinheit der Druckausgleich in zumindest zwei Stufen herbeigeführt wird, das dadurch gekennzeichnet ist, daß periodisch die bei aufeinanderfolgenden Takten in einer Adsorptionseinheit bzw. den zugehörigen Verbindungsleitungen gemessene Istwerte einer für das System charakteristischen Kennzahl mit deren Sollwerten verglichen werden, die durch eventuelle Abweichungen identifizierten defekten Ventile bzw. Adsorptionseinheiten kurzgeschlossen, die Arbeitsweise der verbleibenden Adsorptionseinheiten so in ein der verbleibenden Anzahl angepaßtes Taktschema überführt wird, daß aufgrund ihres Arbeitszustandes zusammengehörige Adsorptionseinheiten miteinander verbunden werden und gegebenenfalls nach Behebung der Defekte der alte Zustand des Systems wiederhergestellt wird.

Die für das System charakteristischen Kennzahlen sind zumindest Endschalter der Ventile, wobei der Sollwert jeweils die gemäß dem Taktschema definierte Solleinstellung der Ventile angibt. Eine Abweichung tritt dann auf, wenn z.B. ein Ventil auf einen Schaltbefehl nicht anspricht. In diesem Fall ist das defekte Ventil durch eine direkte Anzeige unmittelbar identifiziert.

Im Normalfall verliert ein Ventil seine Dichtungseigenschaften jedoch allmählich, so daß im Anfangsstadium eines solchen Defektes zunächst gewisse Abweichungen z.B. beim Druckausgleich zwischen zwei Adsorptionseinheiten auftreten, die jedoch noch nicht unmittelbar zum Abschalten der Anlage zwingen. Die Identifizierung des für ein solches Abweichen verantwortlichen Ventils ist nicht unmittelbar möglich, da für eine solche Abweichung eine Vielzahl von an eine Leitung mündenden Ventilen verantwortlich sein kann. Zur Identifizierung solcher Abweichung ist es daher notwendig, weitere charakteristische Kennzahlen des Systems zu definieren. Die Auswahl der charakteristischen Kennzahl richtet sich danach, welche Größe des Systems das Umschalten sum nächsten Takt auslöst.

Wird z.B. das Umschalten zum nächsten Takt nach einem fest vorgegebenen Zeitintervall ausgelöst, so kann, wenn die Ventile nach einer vorgegebenen Kennlinie arbeiten, der Druck in jeder Adsorptionseinheit und/oder den verbindenden Leitungen zwischen jeweils zwei Schalttakten als Sollwert festgelegt werden und als charakteristische Kennzahl des Systems der jeweils gemessene Druck definiert werden. Wird nun eine Abweichung des Drucks vom Solldruck in einer Adsorptionseinheit festgestellt, so kommen für einen Defekt bei einem zu hohen Druck alle solche Ventile in Frage, die die Adsorptionseinheit mit solchen Adsorptionseinheiten bzw. Leitungen verbinden oder gegen diese abschließen, den bei dem jeweiligen Takt einen höheren Druck führen. In dem nachfolgenden Taktschritt haben sich die Druck- und Strömungsverhältnisse geändert, so daß geänderte Abweichungen vom Sollverhalten festgestellt werden, so daß wiederum eine Anzahl von Ventilen angebbar ist, die für einen Defekt in Frage kommen. Dabei können bei der Weiterverfolgung diejenigen Ventile nunmehr ausgeschlossen werden, die nicht für die Abweichungen vom Sollverhalten der beiden Taktfolgen verantwortlich sein können. Als tatsächlich defektes Ventil ergibt sich schließlich dasjenige Ventil, das in einer Folge von Takten für jeden Takt als für einen Defekt in Frage kommend identifiziert ist.

Die den Schalttakt auslösende Größe kann auch der in einer Adsorptionseinheit oder in der mehrere Adsorptionseinheiten verbindenden Leitung herrschende Druck sein, d.h. das Schalten der Ventile zur nächsten Taktphase wird ausgelöst, wenn nach Erreichen der vorgegebenen Druckwerte von allen Meßstellen das Signal "Taktschaltfreigabe" gegeben wurde. Bei ebenfalls vorgegebener Ventilkennlinie kann dann die Zeitdauer bis zur "Taktschaltfreigabe" gemessen werden und zur Identifizierung eines defekten Ventils herangezogen werden. Löst z.B. der Druck einer druckabgebenden Adsorptionseinheit die "Taktschaltfreigabe" aus und ergibt sich ein zu langes Zeitintervall, so kommen alle diejenigen Ventile für einen Defekt in Frage, die in dieser Taktphase die druckabgebende Adsorptionseinheit gegen solche Einheiten mit höherem Druck abschließen oder verbinden.

Ferner ist es möglich, durch selbsttätige Regelung der Ventile eine vorgegebene Druckänderung jeweils innerhalb eines vorgegebenen Zeitintervalls durchzuführen. Dann kann die Ventileinstellung während eines Zeitpunktes der Druckänderung als Überwachungsgröße für die Defektfreiheit der Ventile herangezogen werden. Ergibt sich nämlich, daß z.B. ein Ventil während eines Druckausgleichs weiter geöffnet ist als dies nach einem vorgegebenen Sollverhalten sein sollte, so müssen die auf der druckabgebenden Seite gelegenen Ventile, die die entsprechende Adsorptionseinheit mit solchen Einheiten verbinden, die auf höherem Druck sind, sowie auf der druckaufnehmenden Seite solche, die die Adsorptionseinheit mit Einheiten mit niedrigerem Druck verbinden, für einen möglich Defekt vermerkt werden.

Ist auf diese Weise ein Ventil als tatsächlich defekt identifiziert, wird von dem zunächst vorgegebenen ersten Taktschema entsprechen einem vordefinierten Übergangsschema auf ein zweites Taktschema übergegangen, das nunmehr diejenige Adsorptionseinheit, zu der das defekte Ventil gehört, unberücksichtigt läßt. Das defekte Ventil kann nun ohne Abstellen der Anlage ausgewechselt werden, wobei es zweckmäßig ist, daß die in der Anlage enthaltenen Ventile zumindest einseitig mit Schiebern versehen sind, so daß die Anlage während des Ausbaues des Ventils nicht belüftet wird.

Das erfindungsgemäße Verfahren wird nachfolgend am Beispiel eines speziellen Pressure Swing Adsorption-Verfahrens zur Reinigung von Wasserstoffgas näher erläutert. Hierzu wird insbesondere auf die anliegenden Figuren verwiesen.

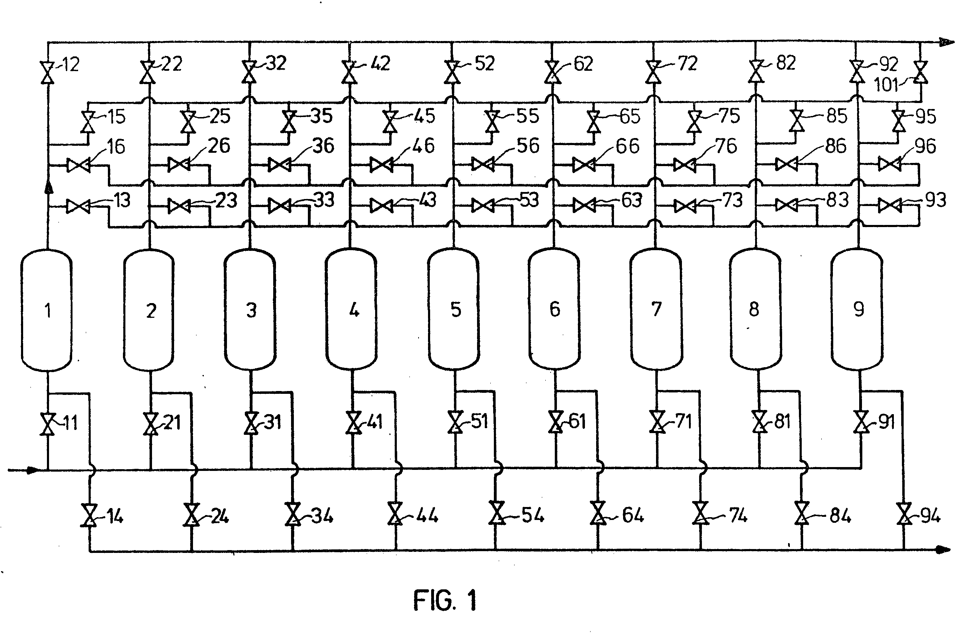

Figur 1 zeigt eine aus 9 Einheiten bestehende Pressure Swing Adsorption-Anlage, wobei die Adsorptionseinheiten mit den Ziffern 1 bis 9 bezeichnet sind. Die Ventile sind mit zweistelligen Ziffern bezeichnet, wobei die erste Stelle jeweils mit der Bezeichnung der Adsorptionseinheit identisch sind, zu der sie gehören. Die zweite Ziffer der Bezeichnung der Ventile gibt jeweils den Typ des Ventils an:

Endziffer 1 bezeichnet das Rohgaseinlaßventil;

Endziffer 2 bezeichnet das Reingasauslaßventil;

Endziffer 4 bezeichnet das Rückspülgasauslaßventil;

Endziffer 5 bezeichnet das Ventil zur Befüllung aus dem Reinwasserstoffsystem und

Endziffern 3 und 6 bezeichnen Ventile zu gemeinsamen Druckausgleichsleitungen.

Mit 101 ist ein Ventil bezeichnet, daß eine Dosierung bei der Befüllung aus dem Reinwasserstoffsystem erlaubt.

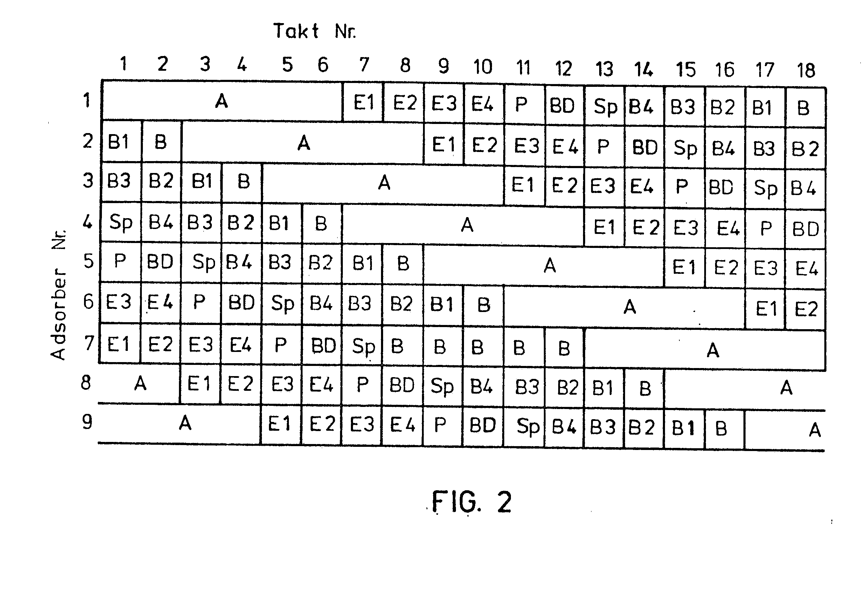

In Figur 2 ist ein beispielsweise vorgegebenes erstes Taktschema unter Berücksichtigung aller neun Adsorptionseinheiten angegeben. Dabei bedeuten.

A Adsorptionsphase

E 1 erste Entleerungsphase durch Druckausgleich mit einer Adsorptionseinheit in der Befüllungsphase B 1

E 2 zweite Entleerungsphase durch Druckausgleich mit einer Adsorptionseinheit in der Befüllungsphase B 2

E 3 dritte Entleerungsphase durch Druckausgleich mit einer Adsorptionseinheit in der Befüllungsphase B 3

E 4 vierte Entleerungsphase, die zunächst zum Spülen einer Adsorptionseinheit durch Druckausgleich mit einer Adsorptionsphase in der Befüllungsphase 4

P fünfte Entleerungsphase zum Spülen einer Adsorptionseinheit in der Spülphase

BD Entleerung der Adsorptionseinheit zum Restgassystem

SP Spülphase (Gas aus einer Adsorptionseinheit in der Entleerungsphase P 5 durchströmt die Adsorptionseinheit zum Restgassystem)

B 4 erste Befüllungsphase durch Druckausgleich mit einer Adsorptionseinheit in der Phase E 4

B 3 zweite Befüllungsphase

B 2 dritte Befüllungsphase

B 1 vierte Befüllungsphase

B Befüllung aus dem Reingassystem

Ein Arbeitszyklus umfaßt hiernach 18 Takte, wobei jeweils 6 Takte eines Zyklus für die Adsorption zur Verfügung stehen.

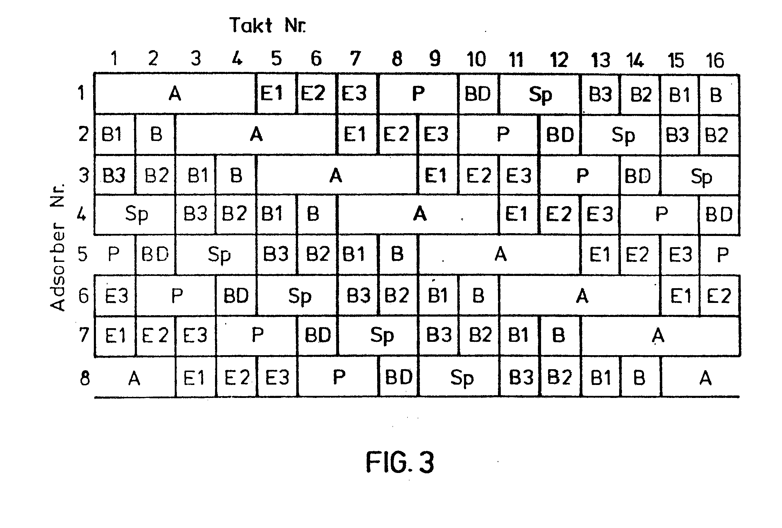

Figur 3 zeigt beispielhaft ein vorgegebenes zweites Taktschema, wobei eine Adsorptionseinheit unberücksichtigt bleibt. Zu diesem zweiten Taktschema wird mit der in Figur 1 dargestellten beispielhaften Anlage übergegangen, nachdem ein Ventil als defekt identifiziert worden ist. Es zeigt sich, daß bei Stillegung der neunten Adsorbereinheit nach dem 18. Takt des ersten Taktschemas unmittelbar zum ersten Takt des zweiten Taktschemas übergegangen werden kann, da sich die Adsorptionseinheiten 1 bis 8 zu diesem Zeitpunkt in der richtigen Taktphase befinden. Die neunte Adsorptionseinheit befindet sich zum Zeitpunkt des Übergangs vom ersten zum zweiten Taktschema in der Phase der Adsorption, d.h. bei hohem Druck. Je nach dem, welche Reparatur auszuführen ist, bzw. welches Ventil auszutauschen ist, kann der Druck durch Öffnen des Restgasventils 94 nötigenfalls abgebaut werden.

Die Belastbarkeit einer Adsorptionseinheit ist durch die Beschickungsrate mit Rohgas, d.h. der im Rohgas enthaltenen Verunreinigungsmenge, sowie durch die Adsorptionszeit während eines Arbeitszyklus bestimmt. Nach dem Übergang zum vorgegebenen zweiten Taktschema gemäß Figur 3 beträgt die Anzahl der Takte, während der eine Einheit zur Adsorption zur Verfügung steht, nur noch 4 von 16 Takten. Entsprechend wird die Beschickungsrate mit Rohgas zur Erhaltung der Leistung des Gesamtsystems erhöht. Dadurch sind Druckänderungen in den verschiedenen Arbeits- und Druckausgleichsphasen gegeben. Der dadurch notwendige Ausgleich beim Übergang von einem Taktschema zum anderen wird zweckmäßig während einer Synchronisationsphase durchgeführt, wobei vorhandene zu hohe Drücke in das Restgassystem entspannt werden, oder vorhandene zu geringe Drücke aus dem Reingassystem höher gestellt werden.

Im Falle, daß ein solcher Defekt auftritt, der es nicht erlaubt, die Anlage bis zu einem solchen Takt weiter zu betreiben, bei dem ein unmittelbarer Übergang zum zweiten Taktschema möglich ist, kann durch zwischengeschaltete Synchronisierungstakte der Übergang herbeigeführt werden. Die Synchronisierungtakte unterscheiden sich von den vorgegebenen Taktschemata, die für einen ungestörten Arbeitszyklus gelten, dadurch, daß gewisse Takte wiederholt werden oder gewisse Druckausgleiche durch Befüllen aus dem Reingassystem oder Entleerung in das Restgassystem durchgeführt werden. Die Übergangstakte müssen für jede mögliche Taktphase entsprechend dem vorgegebenen Taktschemata definiert werden. Bei gut angepaßten Taktschemata beträgt die Dauer der Synchronisationsphase im allgemeinen nicht mehr als 2 bis 3 Taktphasen.

**Patentansprüche**

1. Kontinuierliches selektives Adsorptionsverfahren nach dem Druckwechselprinzip mit zumindest acht phasenverschoben arbeitenden Adsorptionseinheiten mit einem Taktschema, wonach in jeder Adsorptionseinheit zur periodischen Überführung zwischen den Arbeitszuständen "Adsorption" und "Gegenstromspülung" zur Erzielung einer angenähert adiabatischen Druckänderung durch Verbindung über entsprechend gestellte Ventile mit einer jeweils im Nachbar-Druckbereich befindlichen Adsorptionseinheit der Druckausgleich in mindest zwei Stufen herbeigeführt wird, dadurch gekennzeichnet, daß periodisch die bei aufeinanderfolgenden Takten in einer Adsorptionseinheit bzw. den zugehörigen Verbindungsleitungen gemessenen Istwerte einer für das System charakteristischen Kennzahl mit deren Sollwerten verglichen werden, die durch eventuelle Abweichungen identifizierten defekten Ventile bzw. Adsorptionseinheiten kurzgeschlossen, die Arbeitsweise der verbleibenden Adsorptionseinheiten so in ein der verbleibenden Anzahl angepaßtes Taktschema überführt wird, daß aufgrund ihres Arbeitszustandes zusammengehörige Adsorptionseinheiten miteinander verbunden werden und gegebenenfalls nach Behebung der Defekte der alte Zustand des Systems wiederhergestellt wird.

2. Verfahren nach Anspruch 1, dadurch gekennzeichnet, daß die den Schalttakt auslösende Größe ein vorgegebenes Zeitintervall ist und in jeder Druckadsorptionseinheit und/oder den die Druckadsorptionseinheiten verbindenden Leitungen der Druck gemessen wird und mit einem entsprechend den Ventil-Kennlinien vorgegebenem Solldruck als charakteristischer Kennzahl verglichen wird.

3. Verfahren nach Anspruch 1, dadurch gekennzeichnet, daß die den Schalttakt auslösende Größe der Druck ist und das Zeitintervall bis zum Erreichen eines Solldrucks gemessen und mit einem entsprechend der Ventil-Kennlinie vorgegebenen Sollzeitintervall verglichen wird.

4. Verfahren nach Anspruch 3, dadurch gekennzeichnet, daß die den Schalttakt definierende Zustandsgröße der Druck der druckaufnehmende Druckadsorptionseinheit ist.

5. Verfahren nach Anspruch 2, dadurch gekennzeichnet, daß während des den Schalttakt auslösende Zeitintervall durch Ventilsteuerung eine vorgegebene Druckänderung durchgeführt wird, und die Ventilstellung als Meßgröße registriert und mit einer gemäß der Ventil-Kennlinie vorgegebenen Sollventileinstellung verglichen wird.

## Revendications

1. Procédé d'adsorption sélectif continu selon le principe d'alternance de pression, avec au moins huit unités d'adsorption travaillant avec décalage des phases, avec un schéma de temps suivant lequel, dans chaque unité d'adsorption, pour un passage périodique entre les états de travail "adsorption" et "purge en contre-courant", la compensation de pression est réalisée dans au moins deux stades dans le but d'obtenir un changement de pression sensiblement adiabatique par raccordement à l'aide de soupapes placées de manière appropriée avec une unité d'adsorption se trouvant chaque fois dans l'intervalle de pression voisin, caractérisé en ce que, périodiquement, les valeurs instantanées d'un indice caractéristique pour le système, mesurées dans des temps successifs dans une unité d'adsorption ou dans les canalisations de raccordement apparentées, sont comparées à leurs valeurs de consigne, en ce que les soupapes ou unités d'adsorption défectueuses identifiées par des écarts éventuels, sont court-circuitées, en ce que le mode opératoire des unités d'adsorption restantes est converti en un schéma de temps adapté au nombre restant de telle sorte que les unités d'adsorption apparentées sur la base de leur état de travail soient raccordées entre elles et en ce qu'éventuellement, après suppression des défauts, l'ancien état du système est rétabli.

2. Procédé selon la revendication 1, caractérisé en ce que la grandeur déclenchant le temps de commutation est un intervalle de temps prédéterminé et en ce que dans chaque unité d'adsorption sous pression et/ou dans les conduites raccordant les unités d'adsorption sous pression on mesure la pression et la compare à une pression de consigne prédéterminée correspondant à la courbe caractéristique de la soupape, en tant qu'indice caractéristique.

3. Procédé selon la revendication 1, caractérisé en ce que la grandeur déclenchant le temps de commutation est la pression et en ce que l'intervalle de temps jusqu'à obtention d'une pression de consigne est mesuré et comparé avec un intervalle de temps de consigne prédéterminé correspondant à la courbe caractéristique de la soupape.

4. Procédé selon la revendication 3, caractérisé en ce que la grandeur d'état définissant le temps de commutation est la pression de l'unité d'adsorption recueillant la pression.

5. Procédé selon la revendication 2, caractérisé en ce que pendant l'intervalle de temps déclenchant le temps de commutation on effectue par un réglage de la soupape un changement de pression prédéterminé et en ce que la position de la soupape est enregistrée en tant que grandeur de mesure et comparée à un réglage de soupape de consigne prédéterminé selon la courbe caractéristique de la soupape.

## Claims

1. Continuous selective adsorption process on the pressure swing principle with at least 8 adsorption units operating in staggered phases with a programme scheme in which, in order to achieve approximately adiabatic pressure change, the pressure equalisation required in each adsorption unit for the periodic changeover between the operating states of "adsorption" and "counterflow rinsing" is carried out in at least two stages by connecting the adsorption unit to an adsorption unit which is in the adjacent pressure region by means of suitably adjusted valves, characterised in that the actual values of a performance characteristic of the system measured in successive operating stages in an adsorption unit or the associated connecting pipes are periodically compared with the nominal values, those valves or adsorption units which are identified as defective by the deviations between the nominal and actual values are short circuited, the mode of operation of the remaining adsorption units is transferred to a programme adapted to the remaining number of units adsorption units which belong together by virtue of this operating state are connected together and, if circumstances permit, the original state of the system is reestablished after elimination of the defect.

2. Process according to Claim 1, characterised in that the factor which activates the switching stage is a prescribed time interval, and the pressure in each pressure adsorption unit and/or in the pipes connecting these units is measured and compared with a nominal pressure conforming to the characteristic curve of the valve, this nominal pressure being used as performance characteristic reference.

3. Process according to Claim 1, characterised in that the factor which activates the switching stage is the pressure, and the time interval taken to reach a nominal pressure is measured and compared with a prescribed nominal time interval corresponding to the characteristic curve of the valve.

4. Process according to Claim 3, characterised in that the factor which defines the switching stage is the pressure of the pressure adsorption unit which is taking up pressure.

5. Process according to Claim 2, characterised in that a given pressure change is produced by valve control during the time interval which activates the switching stage, and the valve setting is recorded as the measured magnitude and compared with a nominal valve setting prescribed by the characteristic curve of the valve.

FIG. 1

Takt Nr.

| Adsorber Nr. | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| 1 | A | A | A | A | A | A | E1 | E2 | E3 | E4 | P | BD | Sp | B4 | B3 | B2 | B1 | B |
| 2 | B1 | B | A | A | A | A | A | A | E1 | E2 | E3 | E4 | P | BD | Sp | B4 | B3 | B2 |
| 3 | B3 | B2 | B1 | B | A | A | A | A | A | A | E1 | E2 | E3 | E4 | P | BD | Sp | B4 |
| 4 | Sp | B4 | B3 | B2 | B1 | B | A | A | A | A | A | A | E1 | E2 | E3 | E4 | P | BD |
| 5 | P | BD | Sp | B4 | B3 | B2 | B1 | B | A | A | A | A | A | A | E1 | E2 | E3 | E4 |
| 6 | E3 | E4 | P | BD | Sp | B4 | B3 | B2 | B1 | B | A | A | A | A | A | A | E1 | E2 |
| 7 | E1 | E2 | E3 | E4 | P | BD | Sp | B | B | B | B | B | A | A | A | A | A | A |
| 8 | A | A | E1 | E2 | E3 | E4 | P | BD | Sp | B4 | B3 | B2 | B1 | B | A | A | A | A |
| 9 | A | A | A | A | E1 | E2 | E3 | E4 | P | BD | Sp | B4 | B3 | B2 | B1 | B | A | A |

FIG. 2

0006138

Takt Nr.

| Adsorber Nr. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 1 | A | A | A | A | E1 | E2 | E3 | P | P | BD | Sp | Sp | B3 | B2 | B1 | B |
| 2 | B1 | B | A | A | A | E1 | E2 | E3 | P | P | BD | Sp | Sp | Sp | B3 | B2 |
| 3 | B3 | B2 | B1 | B | A | A | A | A | E1 | E2 | E3 | P | P | BD | Sp | Sp |
| 4 | Sp | Sp | B3 | B2 | B1 | B | A | A | A | E1 | E2 | E3 | P | P | P | BD |
| 5 | P | BD | Sp | Sp | B3 | B2 | B1 | B | A | A | A | A | E1 | E2 | E3 | P |
| 6 | E3 | P | P | BD | Sp | Sp | B3 | B2 | B1 | B | A | A | A | A | E1 | E2 |
| 7 | E1 | E2 | E3 | P | P | BD | Sp | Sp | B3 | B2 | B1 | B | A | A | A | A |
| 8 | A | A | E1 | E2 | E3 | P | P | P | BD | Sp | Sp | Sp | B3 | B2 | B1 | B | A | A |

FIG. 3